# EUROPEAN PATENT SPECIFICATION

(11) **EP 3 637 262 B1**
(45) Date of publication and mention of the grant of the patent: **01.12.2021**
(21) Application number: 18827708.1
(22) Date of filing: 20.06.2018
(51) Int. Cl.: G06F 9/44, G06F 11/34, G06F 15/173

(54) **VERIFICATION DEVICE FOR VEHICLE CONTROL DEVICE AND VEHICLE CONTROL DEVICE**
VERIFIZIERUNGSVORRICHTUNG FÜR FAHRZEUGSTEUERUNGSVORRICHTUNG UND FAHRZEUGSTEUERUNGSVORRICHTUNG
DISPOSITIF DE VÉRIFICATION POUR DISPOSITIF DE COMMANDE DE VÉHICULE ET DISPOSITIF DE COMMANDE DE VÉHICULE

(30) Priority: 03.07.2017 JP 2017130694
(43) Date of publication of application: 15.04.2020
(73) Proprietor: Hitachi Astemo, Ltd., Hitachinaka-shi, Ibaraki 312-8503 (JP)
(72) Inventor: IIDA Takahiro, Tokyo 100-8280 (JP); FUKUDA Takeshi, Tokyo 100-8280 (JP); IRIE Toru, Hitachinaka-shi Ibaraki 312-8503 (JP); ABE Yusuke, Hitachinaka-shi Ibaraki 312-8503 (JP)
(74) Representative: Manitz Finsterwald Patent- und Rechtsanwaltspartnerschaft mbB
(86) International application number: PCT/JP2018/023394
(87) International publication number: WO 2019/009068

(56) References cited:
- EP-A1- 2 407 886
- GB-A- 2 486 136
- JP-A- 2010 191 758
- JP-A- 2011 028 458
- JP-A- 2013 045 154
- JP-A- 2014 191 655
- JP-A- 2015 095 061
- JP-A- 2015 179 465
- US-A1- 2013 151 220

## Description

### Technical Field

The present invention relates to a verification device for a vehicle control device and a vehicle control device.

### Background Art

Conventionally, parallel computer systems having a plurality of cores (or nodes) have been proposed.

### Citation List

### Patent Literature

PTL 1: WO 2011/001519

### Summary of Invention

### Technical Problem

In the parallel computer system, it is difficult to grasp whether a process executed by each processing unit (core) is operating at an intended timing. In particular, when a program for an old single core system, different from a program designed on the premise of parallelization, is parallelized, it is difficult to grasp any part after parallelization to which a certain process before being subjected to the parallelization corresponds. Therefore, in such a case, it is difficult to guarantee equivalence before and after parallelizing the program.

PTL 1 discloses a system that synchronizes processes among a plurality of nodes. The system of PTL 1 designates processes to be executed simultaneously in advance in order to synchronize the plurality of processes in the plurality of nodes. Further, the system has a function of temporarily holding execution of a process, and synchronizes start points of the processes among the plurality of nodes.

However, the system of PTL 1 only synchronizes the start points of the processes, and it is difficult to sufficiently perform a test when the plurality of processes are executed in parallel. For example, it is difficult to sufficiently perform the test when the program for the single core system is parallelized as described above. In the system of PTL 1, it is difficult to perform synchronization at a specific timing during the process and to confirm influence of the plurality of processes when the parallelized program is executed on the plurality of nodes.

US 2013/151220 A1 discloses a multi-ECU simulation in which internal peripherals including an internal peripherals scheduler are emulated.

UK 2486136 A discloses a V-PILS simulation method in which a peripheral scheduler executes synchronization control over plural peripheral emulators.

EP 2407886 A1 discloses a simulation method in which a plant simulator is synchronized with plural emulators of CPUs and peripherals.

It is the object of the invention to provide a verification device for a vehicle control device capable of synchronizing processes of a plurality of cores so as to correspond a specific timing in a program before being subjected to parallelization when the parallelized program is executed by the plurality of cores.

### Solution to Problem

The above object is accomplished by the features of claim 1.

A verification device for a vehicle control device has the features of claim 1. It has a plurality of cores, the verification device including: a timing synchronization unit that acquires synchronization timing information indicating a timing to synchronize the plurality of cores; and a control instruction unit that creates control instruction information for the plurality of cores based on the synchronization timing information, in which the timing synchronization unit determines whether each of the cores has been synchronized at a timing at which synchronization needs to be performed based on execution results of the plurality of cores. Claim 1 recites further features.

### Advantageous Effects of Invention

According to the present invention, it is possible to synchronize the processes of the plurality of cores so as to correspond the specific timing in the program before being subjected to parallelization when the parallelized program is executed by the plurality of cores. Another characteristic relating to the present invention will become apparent from the description of the present specification and the accompanying drawings. Further, other objects, configurations, and effects will be apparent from the following description of embodiments.

### Brief Description of Drawings

[FIG. 1] FIG. 1 is a schematic configuration diagram of a vehicle system according to a first embodiment.
[FIG. 2] FIG. 2 is a diagram illustrating a hardware (H/W) configuration of a vehicle control device according to the first embodiment.
[FIG. 3] FIG. 3 is a diagram illustrating an H/W configuration of an ECU according to the first embodiment.
[FIG. 4] FIG. 4 is a diagram illustrating a software module configuration executed in a core of the ECU according to the first embodiment.
[FIG. 5] FIG. 5 is a view illustrating a relationship between the ECU and a simulator according to the first embodiment.
[FIG. 6] FIG. 6 is a diagram illustrating a software module configuration of the simulator according to the first embodiment.
[FIG. 7] FIG. 7 is a diagram illustrating software module configurations of a control unit and a communication management unit of the ECU core according to the first embodiment.
[FIG. 8A] FIG. 8A is a table illustrating an example of control instruction information according to the first embodiment.
[FIG. 8B] FIG. 8B is a table illustrating an example of the control instruction information according to the first embodiment.
[FIG. 9A] FIG. 9A is a table illustrating an example of a synchronization table according to the first embodiment.
[FIG. 9B] FIG. 9B is a table illustrating an example of the synchronization table according to the first embodiment.
[FIG. 10] FIG. 10 is a table illustrating an example of log information according to the first embodiment.
[FIG. 11] FIG. 11 is a flowchart illustrating processes executed by the simulator and the ECU according to the first embodiment.
[FIG. 12] FIG. 12 is a diagram illustrating a software module configuration executed in a core of an ECU according to a second embodiment.
[FIG. 13] FIG. 13 is a diagram illustrating a software module configuration executed in an ECU according to a third embodiment.
[FIG. 14] FIG. 14 is a table illustrating an example of a synchronization table according to a fourth embodiment.
[FIG. 15] FIG. 15 is a table illustrating an example of control instruction information according to the fourth embodiment.

### Description of Embodiments

Hereinafter, embodiments of the present invention will be described with reference to accompanying drawings. Although the accompanying drawings illustrate specific embodiments in accordance with the principle of the present invention, these embodiments are described for the understanding of the present invention.

Hereinafter, embodiments of a vehicle control device in a vehicle will be described as preferred examples. However, the following embodiments do not prevent applications other than the vehicle control device.

### [First Embodiment]

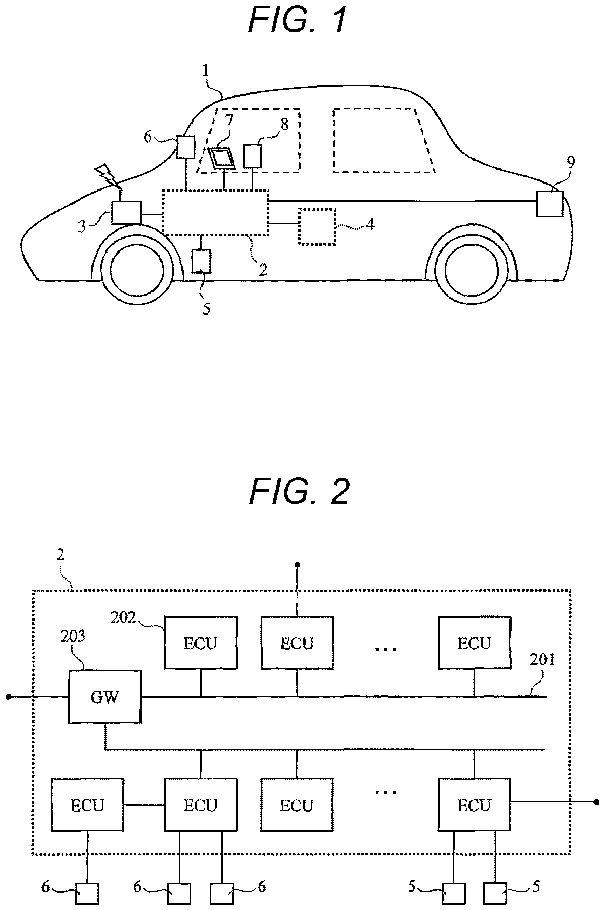

FIG. 1 is a schematic configuration diagram of a vehicle system according to a first embodiment. Reference sign 1 represents a vehicle (such as an automobile) having a vehicle control device therein. Reference sign 2 represents a vehicle control device constituted by, for example, an in-vehicle network (CAN: Controller Area Network, CANFD: CAN with Flexible Data-rate, Ethernet (registered trademark), or the like) and a controller (ECU: Electronic Control Unit or the like). Reference sign 3 represents a communication device, which performs wireless communication between the vehicle 1 and an external device (for example, communication with a mobile phone or communication using a protocol such as wireless LAN and WAN) and acquires and transmits information on the external world (infrastructure and other vehicles), or a communication device which has a diagnostic terminal (OBD), the Ethernet terminal, a terminal for an external recording medium (for example, a USB memory, an SD card, or the like), and the like and performs wired connection to implement wired communication with the vehicle control device 2. Reference sign 4 represents a vehicle control device configured using a network that uses, for example, protocol different from or the same as the protocol of the vehicle control device 2.

Reference sign 5 represents a drive device (such as an actuator) that drives a machine and an electric device (for example, an engine, a transmission, a wheel, a brake, a steering device, or the like) that controls vehicle motion under control of the vehicle control device 2. Reference sign 6 represents a recognition device constituted by an external sensor such as a camera, a radar, a LIDAR, and an ultrasonic sensor that acquires information input from the external world and generates external world recognition information, and a dynamic system sensor (an acceleration sensor, a wheel speed sensor, or a global positioning system (GPS)) that recognizes a state (a motion state, position information, or the like) of the vehicle 1.

Reference sign 7 represents an output device, such as a liquid crystal display, a warning light, and a speaker, that is connected to a network system (not illustrated) in a wired or wireless manner, receives data sent from the network system, and displays or outputs necessary information such as message information (for example, a video and a sound).

Reference sign 8 represents an input device, such as a steering wheel, a pedal, a button, a lever, and a touch panel, configured to generate an input signal as a user inputs an operational intention or instruction to the vehicle control device 2. Reference sign 9 represents a notification device, such as a lamp, an LED, and a speaker, for the vehicle 1 to notify the external world of the state of the vehicle 1.

The vehicle control device 2 is connected to the vehicle control device 4, the communication device 3, the drive device 5, the recognition device 6, the output device 7, the input device 8, and the notification device 9, and the like to mutually transmit and receive information.

FIG. 2 is a diagram illustrating a hardware (H/W) configuration of the vehicle control device 2 according to the first embodiment. Reference sign 201 represents a network link connected to an in-vehicle network system, for example, a network link such as a CAN bus. Reference sign 202 represents an electronic control unit (ECU) connected to the network link 201 and a network link (including a dedicated line) other than the network link 201. The ECU 202 controls the drive device 5 and the recognition device 6 via the network, and transmits and receives information to and from the drive device 5 and the recognition device 6. Reference sign 203 represents a gateway (hereinafter referred to as GW) that connects a plurality of the network links 201, and transmits and receives data to and from each network link.

A network topology in FIG. 2 is a bus type in which a plurality of the ECUs 202 are connected to two buses. As other examples, the network topology may be a star type in which a plurality of ECUs are connected directly to a GW, a link type in which an ECU is connected to a series of links in a ring shape, or a mixed type which is configured using a plurality of networks and in which the respective types are mixed. Regarding the ECU 202 and the GW 203, an ECU having a GW function, a GW having an ECU function, or the like may be employed other than the example of FIG. 2.

The ECU 202 performs control processing, such as output of a control signal to the drive device 5, acquisition of information from the recognition device 6, output of the control signal and information to a network, and change of an internal state, based on data received from the network.

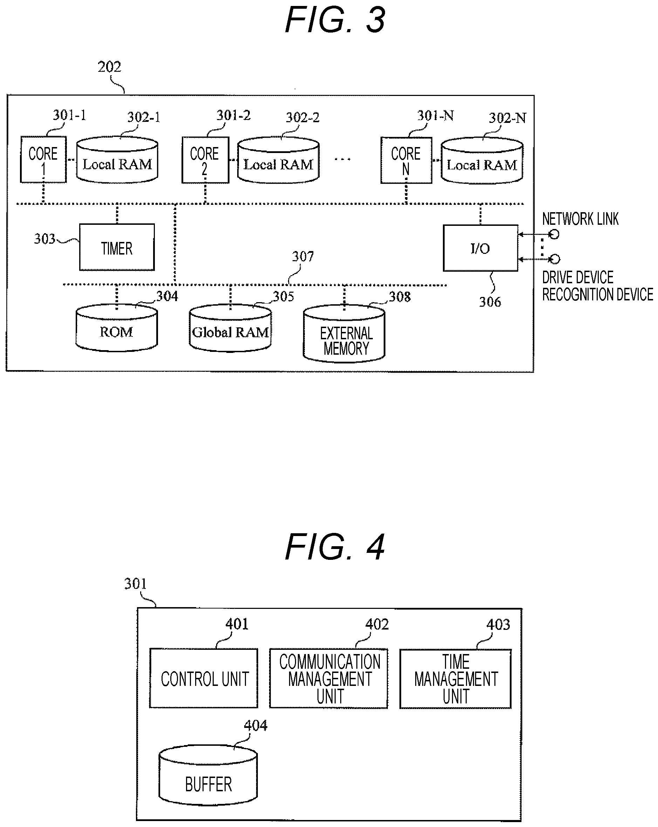

FIG. 3 is a diagram illustrating an H/W configuration of the ECU 202 according to the first embodiment. The ECU 202 has a plurality of cores, and performs parallel control using the plurality of cores.

Reference sign 301 represents a core such as a CPU (processor) that has a storage element, such as a cache and a register, and executes control. In the example of FIG. 3, the ECU 202 has a plurality of cores 301-1 to 301-N. Reference sign 302 represents a random access memory (RAM) that stores volatile data accessible only by a specific core. In the example of FIG. 3, the cores 301-1 to 301-N include corresponding local RAMs 302-1 to 302-N, respectively. Reference sign 303 represents a timer that manages time and timing using a clock (not illustrated) or the like. Reference sign 304 represents a read only memory (ROM) that stores a program and nonvolatile data. Reference sign 305 represents a global random access memory (RAM) that stores volatile data accessible only by unspecified cores.

Reference sign 306 represents an input/output (I/O) that transmits and receives data to and from the drive device 5 and/or the recognition device 6 connected by a network such as the network link 201 or a dedicated line. Reference sign 307 represents an internal bus used for communication inside the ECU 202. Reference sign 308 represents an external memory that can retain data even after power is cut off, and is an EEPROM, a solid state drive, a hard disc drive, or the like.

FIG. 4 is a diagram illustrating a software module configuration executed in the cores 301-1 to 301-N according to the first embodiment. Reference sign 401 represents a control unit that analyzes data acquired from a communication interface (I/F) (not illustrated) and controls the entire software module. Reference sign 402 represents a communication management unit that manages an operation and a state of the communication I/F and instructs the communication I/F via the internal bus 307. Reference sign 403 represents a time management unit that manages the timer 303 and acquires and controls information relating to time. Reference sign 404 represents a buffer that temporarily secures data.

FIG. 4 illustrates an operation concept on the core 301. In practice, the core 301 acquires information necessary for the operation from the ROM 304 and the RAM 305 as appropriate or writes the information to the ROM 304 and the RAM 305 as appropriate.

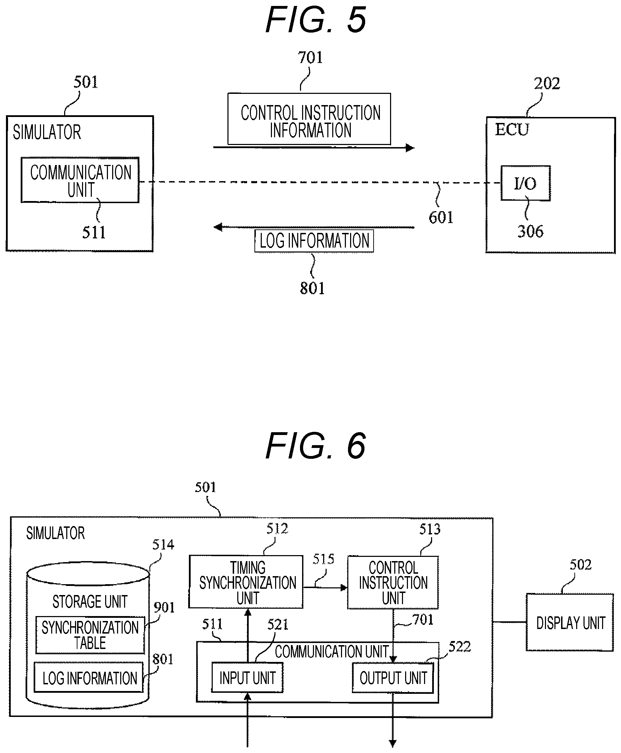

FIG. 5 is a view illustrating a relationship between the ECU 202 and a simulator 501 according to the first embodiment. The simulator 501 is a verification device for the vehicle control device 2. In this example, the simulator 501 is a computer connected to the network of the vehicle 1, and a function of the simulator 501 is implemented by a program executed on a computer. Incidentally, the simulator 501 is not limited to the computer outside the vehicle, and may be implemented in the ECU 202 mounted on the vehicle.

The ECU 202 and the simulator 501 are connected via a communication route 601. The simulator 501 transmits control instruction information 701 to the ECU 202 via a communication unit 511. The ECU 202 receives the control instruction information 701 via the I/O 306 and transmits the control instruction information 701 to the core 301. When the communication I/F of the core 301 receives the control instruction information 701, the core 301 executes a process according to the control instruction information 701 and transmits log information (an execution result) 801 to the I/O 306 via the communication I/F. The ECU 202 transmits the log information 801 to the simulator 501 via the I/O 306. The simulator 501 receives the log information 801 via the communication unit 511. The simulator 501 calculates the next control instruction information 701 based on the received log information 801.

The communication route 601 is a route that connects the ECU 202 and the simulator 501. The communication route 601 may be any of in-vehicle networks including CAN and communication methods such as Ethernet and wireless WiFi, or a route that combines the communication methods via a gateway, another ECU, or a computer. Incidentally, the communication is not limited to direct communication between the ECU 202 and the simulator 501, and other devices may be interposed between the ECU 202 and the simulator 501.

FIG. 6 is a diagram illustrating a software module configuration of the simulator 501 according to the first embodiment. As described above, the simulator 501 may be realized using, for example, a general-purpose computer. Each processing unit of the simulator 501 may be realized as a function of a program to be executed on a computer.

The computer includes a processor such as a central processing unit (CPU), a storage unit such as a memory, and an auxiliary storage device such as a hard disk. The processing of the simulator 501 may be realized by storing a program code corresponding to each processing unit in the memory and executing the program code by the processor.

The simulator 501 includes the communication unit 511, a timing synchronization unit 512, a control instruction unit 513, and a storage unit 514.

The communication unit 511 includes an input unit 521 and an output unit 522. The input unit 521 receives the log information 801 from the ECU 202. The timing synchronization unit 512 executes a process to be described later based on a synchronization table 901. The timing synchronization unit 512 acquires synchronization timing information 515 from the synchronization table 901, and outputs the synchronization timing information 515 to the control instruction unit 513. The control instruction unit 513 calculates the control instruction information 701 from the synchronization timing information 515, and outputs the control instruction information 701 to the output unit 522. The output unit 522 transmits the control instruction information 701 to the ECU 202.

The storage unit 514 stores the synchronization table 901. Further, the storage unit 514 accumulates log information 801 received from the ECU 202.

The simulator 501 may be connected to a display unit 502 such as a display. The display unit 502 displays the synchronization table 901, the control instruction information 701, and the log information 801. A user can confirm any part after parallelization to which a process before being subjected to the parallelization corresponds based on the synchronization table 901 and the log information 801 displayed on the display unit 502. Further, the user can confirm whether or not the plurality of cores 301 are synchronized at a synchronization timing designated in the synchronization table 901 by referring to the log information 801.

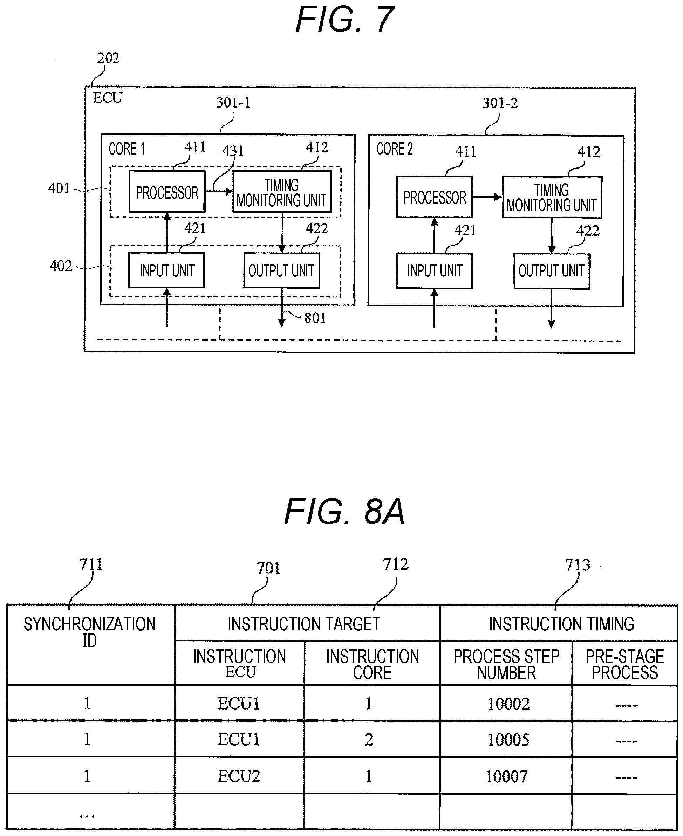

FIG. 7 is a diagram illustrating software module configurations of the control unit 401 and the communication management unit 402 of the cores 301-1 to 301-N of the ECU 202 according to the first embodiment. Although the configuration of the core 301-1 will be described here, the cores 301-2 to 301-N have the same configuration.

The control unit 401 includes a processing unit 411 and a timing monitoring unit 412. Further, the communication management unit 402 includes an input unit 421 and an output unit 422.

The input unit 421 receives the control instruction information 701 from the simulator 501. The input unit 421 delivers the received control instruction information 701 to the processing unit 411. The processing unit 411 operates an application and/or infrastructure software included in the ECU 202 inside the processing unit 411 according to the received control instruction information 701. The timing monitoring unit 412 monitors an operation of the processing unit 411 and acquires operation result information 431. Alternatively, the processing unit 411 outputs the operation result information 431 to the timing monitoring unit 412.

The timing monitoring unit 412 calculates the log information 801 from the operation result information 431, and delivers the log information 801 to the output unit 522. The output unit 522 transmits the received log information 801 to the simulator 501.

Hereinafter, various types of information used in the present embodiment will be described. FIG. 8A is a table illustrating an example of the control instruction information 701 according to the first embodiment. The control instruction information 701 includes a synchronization ID 711, an instruction target 712, and an instruction timing 713 as configuration items.

The synchronization ID 711 is a value constituted by of a number, an alphabet, a symbol, and the like, and a content thereof is not particularly limited and may be set to a value which can identify a relationship of a program execution order.

The instruction target 712 is a value constituted by a character string, a number, a symbol, and the like which can uniquely identify an instruction target. In the example of FIG. 8A, the instruction target 712 includes information on an ECU and a core which serve as instruction targets. The instruction target 712 may be described in units for processing software such as an ECU, a core, and a processor, or information on a vehicle, a server, or another control device may be described therein.

Further, a processing unit in software such as a task and a process name may be designated as the instruction target 712. Incidentally, when the simulator 501 directly transmits the control instruction information 701 to the instruction target, the column of the instruction target 712 can be omitted.

The instruction timing 713 is information on timing for synchronization of instruction targets. For example, the instruction timing 713 describes information (for example, a process step number) which can identify the order of numbers and alphabets or pre-stage/post-stage process names and the like described with information which can uniquely identify process names such as a character string and a number. In the example of FIG. 8A, the instruction timing 713 includes information on synchronization timing relating to a core serving as an instruction target. The instruction timing 713 includes information on a process step number. The instruction target core executes a process up to the process step number described in the instruction timing 713 and stops the process. Further, the instruction timing 713 may include information on a pre-stage process name. The instruction target core executes a pre-stage process described in the instruction timing 713, and then, stops the process. The instruction timing 713 may include at least one of the above-described process step number and information on the pre-stage process. Incidentally, the instruction timing 713 may be time information such as an actual time and a calculation time calculated by an instruction target as other examples.

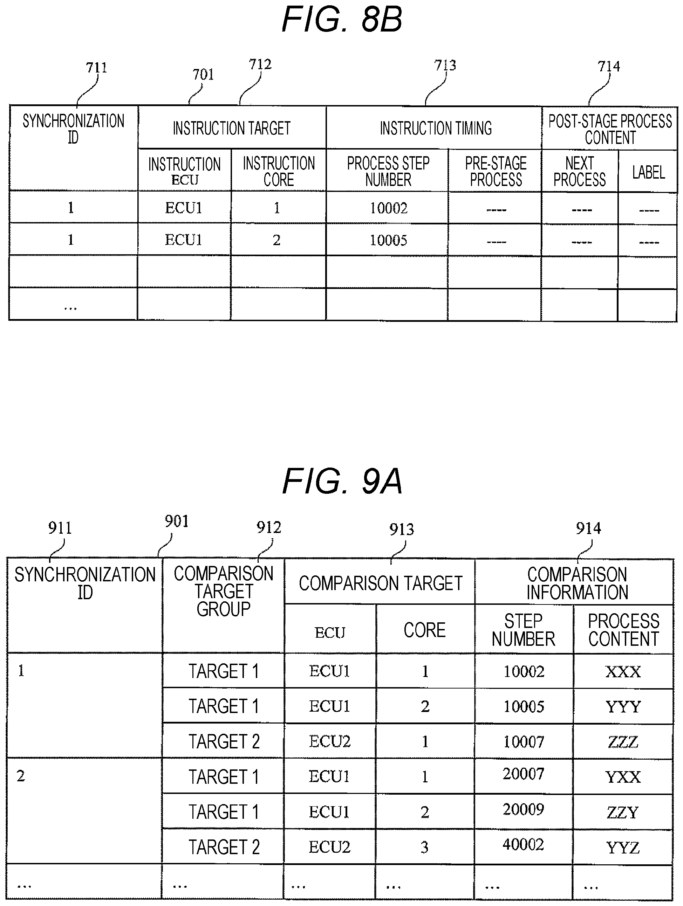

FIG. 8B is a table illustrating an example of the control instruction information 701 according to the first embodiment. The control instruction information 701 may further include a post-stage process content 714. The post-stage process content 714 includes information on the next process and label. The post-stage process content 714 describes information on the next process content to be executed after synchronization at the instruction timing 713. In the example of FIG. 8B, the post-stage process content 714 includes information on the next process name and label. The next process name describes a value constituted by a character string, a number, a symbol, and the like which can uniquely identify the process name. The label describes information such as a variable, an array, and a structure to be used in the next process. A value such as a number, a character string, and a bit string can be used as the label information. The label may include information on values, obtained after execution of the process of these values, and/or information on values before execution of the process.

Incidentally, the control instruction information 701 may include an instruction and a value that operates a program in addition to the above contents.

FIG. 9A is a view illustrating an example of the synchronization table 901 according to the first embodiment. In the synchronization table 901 in FIG. 9A, the control instruction information 701 in FIG. 8A is created. The synchronization table 901 includes a synchronization ID 911, a comparison target group 912, a comparison target 913, and comparison information 914 as configuration items.

The synchronization ID 911 is a value constituted by a number, an alphabet, a symbol, and the like, and a content thereof not particularly limited and may be set to a value that can identify a relationship of a program execution order. A plurality of rows share the same synchronization ID, and rows having the same synchronization ID represent a combination of processes that need to be synchronized.

The comparison target group 912 is a value constituted by a number, an alphabet, a symbol, and the like, and may be any value that can uniquely identify a comparison target group. Rows in which the comparison target group 912 is set to the same value are treated as one set. In the example of FIG. 9A, execution results of a program are compared between "Target 1" and "Target 2". "Target 1" is a group that executes the parallelized program. "Target 2" is a group that executes the program before being subjected to parallelization.

The comparison target 913 is a value constituted by a number, an alphabet, a symbol, and the like, and may be any value that can uniquely identify a comparison target. The comparison target 913 may be described in units of processing software such as an ECU, a core, and a processor, or information on a vehicle, a server, or another control device may be described therein. Further, a processing unit in software such as a task and a process name may be designated as the comparison target 913. In the example of FIG. 9A, a core 1 of the ECU 1 and a core 2 of the ECU 1 are designated as "Targets 1" for execution of the parallelized program. Further, the core 1 of the ECU 2 is designated as "Target 2" for execution of the program before being subjected to parallelization.

The comparison information 914 includes information on a timing at which comparison targets are synchronized.

For example, the comparison information 914 describes information (for example, a process step number) which can identify the order of numbers and alphabets or pre-stage/post-stage process names and the like described with information which can uniquely identify process names such as a character string and a number. In the example of FIG. 9A, the comparison information 914 includes process step number information as the timing for synchronization. Incidentally, the comparison information 914 may be time information such as an actual time and a calculation time calculated by an instruction target as other examples.

The comparison information 914 may include process content information. The process content may include a value constituted by a character string, a number, a symbol, and the like that can uniquely identify a process name. Further, the process content may include label information. The label includes information such as a variable, an array, and a structure to be used in the process. A value such as a number, a character string, and a bit string can be used as the label information. Further, the label may include information on values after execution of the process and/or values before execution of the process.

Incidentally, at least two or more types of comparison target groups 912 need to be included for one synchronization ID 911 in the synchronization table 901. The synchronization table 901 is not limited to the configuration described in the present embodiment, and may include the same information as the above information.

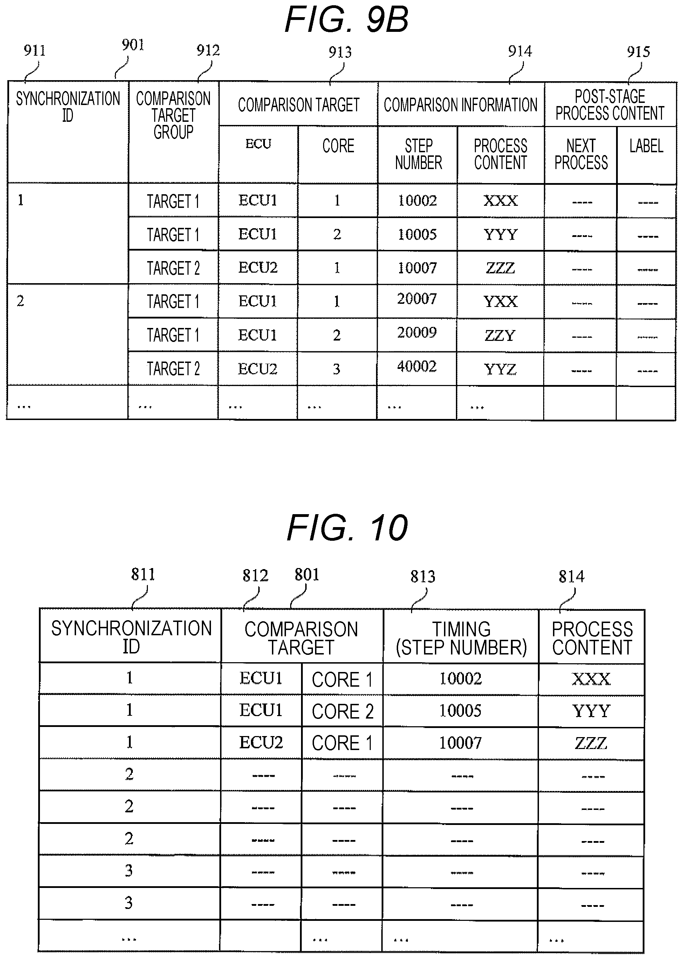

FIG. 9B is a table illustrating an example of the synchronization table 901 according to the first embodiment. In the synchronization table 901 in FIG. 9B, the control instruction information 701 in FIG. 8B is created. The synchronization table 901 may further include a post-stage process content 915. The post-stage process content 915 is the same content as the post-stage process content 714 in FIG. 8B, and thus, will not be described.

Next, a method for specifying a process described in the comparison information 914 of the synchronization table 901 will be described. For example, the synchronization table 901 can be created in advance using the following first method and second method.

As the first method, there is a method of finding a process that needs to be synchronized from each of source codes of programs serving as comparison targets (a program before being subjected to parallelization and a parallelized program). In a plurality of source codes serving as the comparison targets, it is possible to infer a location that needs to be synchronized from a use location of a library function (such as a standard input/output function) provided in a programming language. Therefore, the use location of the library function may be used as the method for specifying the process and location that need to be synchronized and are to be described in the synchronization table 901. For example, locations using the same library function may be picked up in the plurality of source codes serving as the comparison targets, and the picked-up locations may be set as a timing that needs to be synchronized.

As the second method, there is a method of embedding a process that needs to be synchronized in each of source codes of programs serving as comparison targets. A synchronization point may be described in each source code with a tool or hand code. As a result, it is possible to specify a synchronization location. For example, when a location that needs to be synchronized is specified before and after parallelization of the source code, a location that can serve as a synchronization point, such as a loop processing start location and a function start location, is traced. Further, a process for synchronization is embedded in the location by a tool or a designer (for example, a function, a pipeline process, or the like can be embedded).

The content to be described in the synchronization table 901 is not limited to the above process, and may be edited by the designer.

FIG. 10 is a table illustrating an example of the log information 801 according to the first embodiment. The log information 801 includes a synchronization ID 811, a comparison target 812, a timing 813, and a process content 814 as configuration items.

The synchronization ID 811 and the comparison target 812 have the same contents as the synchronization ID 711 and the instruction target 712 of the control instruction information 701 (or the synchronization ID 911 and the comparison target 913 of the synchronization table 901), respectively, and thus, will not be described.

The timing 813 is information indicating how much the comparison target 812 has actually been executed.

In the example of FIG. 10, the timing 813 is a process step number in a source code, and represents that the comparison target 812 has executed up to the process step number. Incidentally, the timing 813 may have the same content as that designated as the comparison information 914 in the synchronization table 901. The timing 813 may be a process step number, a pre-stage/post-stage process name, or time information such as real time and calculation time.

The process content 814 is information on a process content that has been actually executed by the comparison target 812. The process content 814 is the same content as that designated as the process content of the comparison information 914 in the synchronization table 901, and may include a process name, label information, and the like. The label includes information such as a variable, an array, and a structure used in the actually executed process. A value such as a number, a character string, and a bit string can be used as the label information. Further, the label may include information on values after execution of the process and/or values before execution of the process.

The log information 801 is expressed by a table with two or more rows having the same synchronization ID 811. The log information 801 is not limited to this configuration, and a format of the table is not limited as long as the content is the same as the content described above.

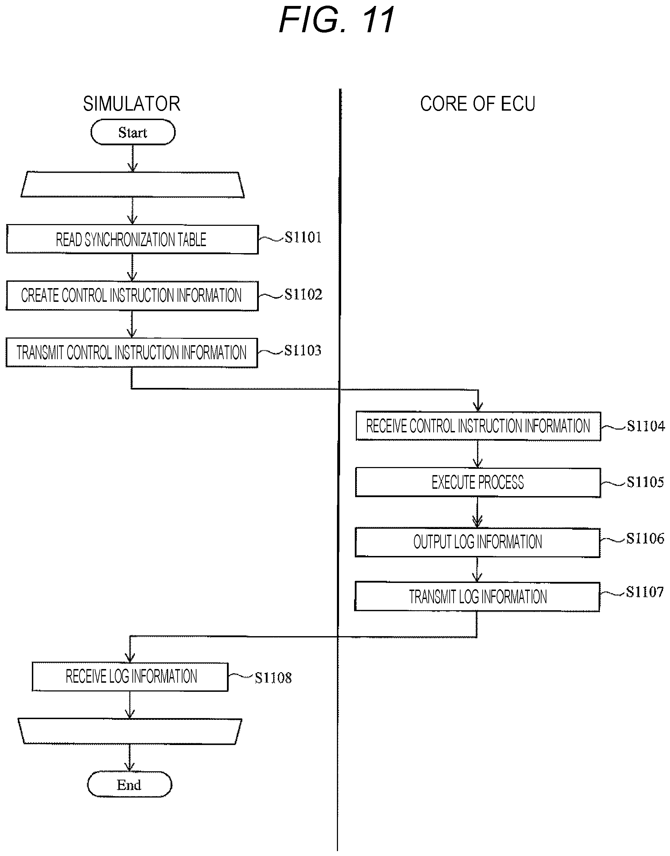

FIG. 11 is a flowchart illustrating processes executed by the simulator 501 and the ECU 202 according to the first embodiment. The simulator 501 and the ECU 202 repeatedly execute S1101 to S1108 until program processing is ended.

(S1101) In an initial operation, the timing synchronization unit 512 reads the first row of the synchronization table 901 and executes the following synchronization timing information generation process. The timing synchronization unit 512 selects a row in the same synchronization ID 911 as the read first row in the synchronization table 901. After finishing selecting all the rows in the same synchronization ID 911, the timing synchronization unit 512 outputs all the selected rows to the control instruction unit 513 as the synchronization timing information 515.

In the second and subsequent operations, the timing synchronization unit 512 determines the next process that needs to be synchronized based on the log information 801. For example, the timing synchronization unit 512 compares the log information 801 received from the ECU 202 with the synchronization table 901 to determine whether or not each of the cores has been synchronized at the timing that needs to be synchronized. When the cores have been synchronized at the timing that needs to be synchronized, the timing synchronization unit 512 determines the next process that needs to be synchronized. In other words, the timing synchronization unit 512 selects the next row in the synchronization ID 911 from the synchronization table 901. The timing synchronization unit 512 selects the first row of the synchronization ID 911 next to the previously selected synchronization ID 911. Next, the timing synchronization unit 512 selects the same row in the synchronization ID 911 as the read first row in the synchronization table 901. After finishing selecting all the rows in the same synchronization ID 911, the timing synchronization unit 512 outputs all the selected rows to the control instruction unit 513 as the synchronization timing information 515. According to such a configuration, when the parallelized program is executed by the plurality of cores, it is possible to synchronize the processes of the plurality of cores at a specific timing in the program before being subjected to parallelization, and to confirm the influence of the process among the plurality of cores while sequentially confirming the synchronization result

Incidentally, when each of the cores has not been synchronized at the timing that needs be synchronized in the second and subsequent operations, the timing synchronization unit 512 may instruct the control instruction unit 513 to transmit the same control instruction information 701 again as in the previous operation. In this case, the timing synchronization unit 512 may display the log information 801 and the information of the synchronization table 901 on the display unit 502 to notify the user.

As a modification, the timing synchronization unit 512 may output a plurality of sets (sets of different synchronization IDs) to the control instruction unit 513 as the synchronization timing information 515. In this case, in S1102 at the subsequent stage, the control instruction unit 513 creates the control instruction information 701 including a plurality of timings to be synchronized.

Further, in the second and subsequent operations, the timing synchronization unit 512 may select a synchronization ID, obtained by adding one to a value of the synchronization ID 811 of the log information 801 received in the current operation, based on the log information 801. In this step, it is sufficient to select the rows having the same synchronization ID 911, and the present invention is not limited to the above-described process.

(S1102) The control instruction unit 513 creates the control instruction information 701 based on the received synchronization timing information 515. For example, the control instruction unit 513 stores the content of the comparison target 913 in the instruction target 712 of the control instruction information 701, and stores the content of the comparison information 914 in the instruction timing 713 of the control instruction information 701. When the synchronization table 901 corresponds to the example of FIG. 9A, the control instruction unit 513 creates the control instruction information 701 of FIG. 8A. When the synchronization table 901 corresponds to the example of FIG. 9B, the control instruction unit 513 creates the control instruction information 701 of FIG. 8B. The control instruction unit 513 outputs the created control instruction information 701 to the output unit 522.

Incidentally, when instruction information is directly transmitted to an instruction target, the control instruction unit 513 may create the instruction information for each row of the control instruction information 701.

Further, the control instruction unit 513 may add a row with an operation instruction, such as stopping or restarting an instruction target operation, to the control instruction information 701. It is sufficient for the control instruction unit 513 to be capable of instructing the synchronization timing to the instruction target that needs to be synchronized, and the control instruction information 701 may be changed as appropriate.

(S1103) The output unit 522 transmits the received control instruction information 701 to the ECU 202.

(S1104) The input unit 421 of the core of the ECU 202 receives the control instruction information 701. Hereinafter, an example in which the core 1 (301-1) of the ECU 1 has received the control instruction information 701 in FIG. 8A will be described.

The input unit 421 delivers the control instruction information 701 to the processing unit 411.

(S1105) The processing unit 411 executes a program until a timing designated by the instruction timing 713 according to the control instruction information 701. The processing unit 411 selects a row (row of the core 1 of the ECU 1) in which the processing unit 411 itself is designated as the instruction target 712 of the control instruction information 701. The processing unit 411 executes the program until the instruction timing 713 (process step number: 10002) of the selected row. For example, the processing unit 411 starts the process or restarts the process that has been interrupted, and stops the process after the process step number (10002) has elapsed.

When the pre-stage process is designated at the instruction timing 713, the processing unit 411 starts or restarts the process that has been interrupted, and stops the process after ending the designated pre-stage process.

Incidentally, when a plurality of timings are designated in the instruction timing 713, the processing unit 411 stops the process at the instruction timing that has arrived first. Then, once the log information 801 is created, the processing unit 411 stops at the next instruction timing.

In the control instruction information 701 in FIG. 8B, the processing unit 411 can determine whether or not the process has been executed up to the instruction timing 713 using the information of the post-stage process content 714. As described above, the post-stage process content 714 indicates the next process content when the process is stopped at the instruction timing 713. Therefore, the processing unit 411 compares a process to be executed next with the post-stage process content 714 after stopping the process to determine whether both the processes coincide with each other. When both the processes do not coincide with each other, the processing unit 411 restarts the process and refers to the instruction timing 713 again to stop the process. The processing unit 411 continues to execute the process until the process to be executed next coincides with the post-stage process content 714. Further, the processing unit 411 stops the process after trying to start and stop the process a specified number of times. Incidentally, when label information is designated in the post-stage process content 714, the processing unit 411 may compare a label (variable or the like) being executed at the point in time when the process is stopped with a label of the post-stage process content 714 and execute the process until both the labels coincide with each other.

(S1106) The timing monitoring unit 412 monitors a process content of the processing unit 411 and creates the log information 801. When the processing unit 411 stops the operation, the timing monitoring unit 412 acquires the information on the synchronization ID 811, the comparison target 812, the timing 813, and the process content 814 from the control instruction information 701 and the operation result information 531 and creates the log information 801. The timing monitoring unit 412 outputs the created log information 801 to the output unit 422.

The timing monitoring unit 412 may output the log information 801 individually for each of the synchronization IDs 811, or may accumulate the log information 801 relating to the plurality of synchronization IDs 811 and output the accumulated log information 801 collectively.

Incidentally, the timing monitoring unit 412 may create the log information 801 at regular intervals as another example.

(S1107) The output unit 422 transmits the received log information 801 to the simulator 501.

(S1108) The input unit 521 of the simulator 501 receives the log information 801 and stores the log information 801 in the storage unit 514. At this time, the timing synchronization unit 512 may display the received log information 801 and the synchronization table 901 on the display unit 502.

In the present embodiment, the simulator 501 includes the timing synchronization unit 512 which determines the next process that needs to be synchronized, and the control instruction unit 513 which generates the control instruction information 701 based on the information from the timing synchronization unit 512. Further, each of the cores 301-1 to 301-N includes the timing monitoring unit 412 that monitors the operation timing of the processing unit 411. Since the log information 801 created by the timing monitoring unit 412 is fed back to the simulator 501 side, the simulator 501 determines the next process that needs to be synchronized based on the log information 801 which is the execution result. According to this configuration, the program can be gradually executed while synchronizing the plurality of cores 301-1 to 301-N at some specific timings, and the influence of the plurality of processes can be confirmed.

According to the present embodiment, it is possible to monitor the processes while synchronizing the processes among the plurality of ECUs and the plurality of cores. In particular, it is necessary to confirm the influence of another process to be operated at a specific timing during execution of a certain process in control having strong real-time characteristics, and the influence of the plurality of processes can be confirmed by synchronizing the parallelized processes at a specific timing in the present embodiment.

Further, the user can confirm any part after parallelization to which the process before being subjected to the parallelization corresponds based on the synchronization table 901 and the log information 801 displayed on the display unit 502 according to the present embodiment. Further, the user can confirm whether or not the plurality of cores are synchronized at the synchronization timing designated in the synchronization table 901 by referring to the log information 801.

### [Second Embodiment]

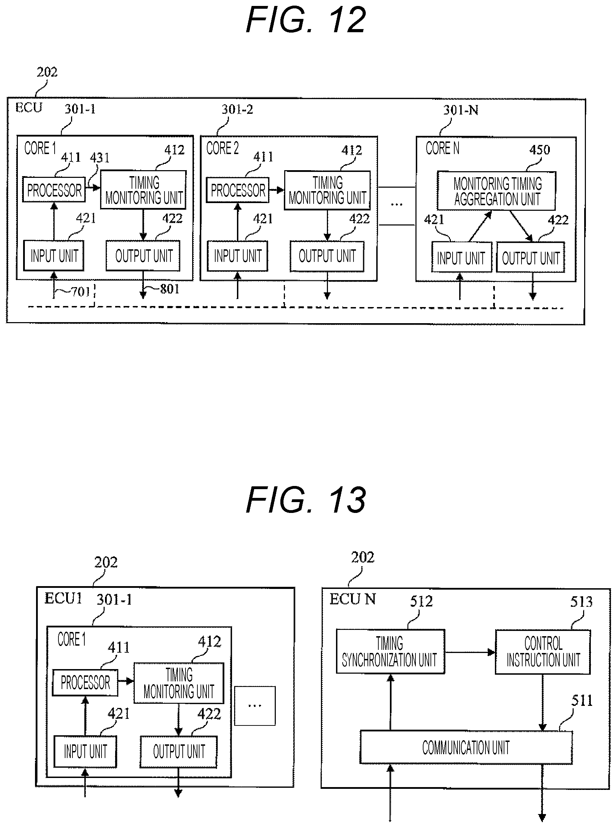

FIG. 12 is a diagram illustrating a software module configuration executed in the cores 301-1 to 301-N of the ECU 202 according to a second embodiment. In the present embodiment, the ECU 202 has one or more timing monitoring unit-dedicated cores. The timing monitoring unit-dedicated core is responsible for a process of storing the log information 801, and thus, it is unnecessary for each core to store the log information 801 in the local RAM 302, and the processing unit 411 of each core can perform only control processing. According to this configuration, it is possible to acquire synchronization log information without imposing a load on vehicle control.

In the example of FIG. 12, the core 301-N is the timing monitoring unit-dedicated core. The core 301-N includes a monitoring timing aggregation unit 450. In the present embodiment, the timing monitoring unit 412 of each core transmits the log information 801 to the monitoring timing aggregation unit 450.

An operation of the monitoring timing aggregation unit 450 will be described. The monitoring timing aggregation unit 450 collects and aggregates the log information 801 from the plurality of cores. The monitoring timing aggregation unit 450 organizes the log information 801 for each synchronization ID. The monitoring timing aggregation unit 450 stores the log information 801 in the external memory 308 at regular intervals, during ignition (IGN) OFF processing, during IGN ON, or according to an instruction from the processing unit 411.

Further, the monitoring timing aggregation unit 450 transmits the log information 801 in the external memory 308 to the simulator 501 at regular intervals, during IGN OFF processing, during IGN ON, or according to an instruction from the processing unit 411.

In the vehicle control device 2, it is a big problem to calculate and store a large amount of log data within a limited communication band and processing performance. Therefore, when the configuration of the present embodiment is adopted such that a specific core is responsible for the process of organizing and storing the log information 801, the log information 801 can be collected without imposing the load on the control processing. That is, optimization of allocation to each of the cores 301-1 to 301-N can be realized while preventing an increase in execution load.

### [Third Embodiment]

FIG. 13 is a diagram illustrating a software module configuration executed in the ECU 202 according to a third embodiment. A function of the simulator 501 may be mounted on the vehicle 1. According to this configuration, a parallelized program can be verified without connecting another computer to a network of the vehicle 1. In the example of FIG. 13, each processing unit of the simulator 501 is mounted on one (ECU N) of the plurality of ECUs 202. As another example, each processing unit of the simulator 501 may be mounted on a specific core among a plurality of cores in the ECU 202.

### [Fourth Embodiment]

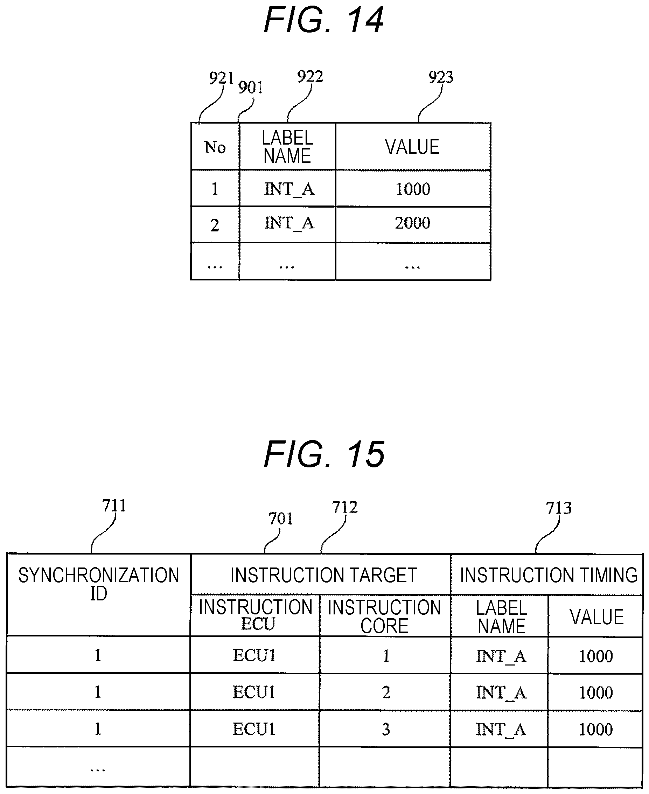

FIG. 14 is a table illustrating an example of the synchronization table 901 according to a fourth embodiment. In the present embodiment, the synchronization table 901 includes information on label names (variable names) and an order of values. The synchronization table 901 includes a No 921, a label name 922, and a value 923 as configuration items.

The No 921 is a value such as a number and an alphabet, and is a value that can grasp a relationship of the order of rows. The label name 922 is a value constituted by a character string, a number, a symbol, and the like that can uniquely identify a variable name. The value 923 is a specific value of the label name 922 at a timing of synchronization. A row of No = 1 in FIG. 14 indicates that processes of cores are stopped and synchronized when a variable name INT_A becomes "1000". According to this configuration, it is possible to synchronize each of the cores by changing the value of the variable. It is possible to obtain log information 801 between cores without identifying a process that is desirably synchronized for each core.

FIG. 15 is a table illustrating an example of the control instruction information 701 according to the fourth embodiment. The control instruction unit 513 creates the control instruction information 701 based on the information of the synchronization table 901. The control instruction unit 513 describes all ECUs and cores in the instruction target 712. Further, the control instruction unit 513 describes information on the label name 922 and the value 923 in the instruction timing 713.

The processing unit 411 of each core executes a process based on the control instruction information 701. The processing unit 411 executes the process until a label name reaches a designated value. Incidentally, the processing unit 411 does not execute a program in a core that does not execute the process relating to the designated label name.

When the synchronization table 901 of FIG. 14 is used, the processing unit 411 of each core temporarily stops a process when the label name (INT A) becomes "1000". This timing is an instruction timing of synchronization ID = 1, and the timing monitoring unit 412 creates the log information 801 up to this point in time. Next, the processing unit 411 of each core temporarily stops the process when the label name (INT_A) becomes "2000". This timing is an instruction timing of synchronization ID = 2, and the timing monitoring unit 412 creates the log information 801 up to this point in time. In the log information 801, a process step number is described in the timing 813, and a label name and a value thereof are described in the process content 814.

When a plurality of programs created by a plurality of companies are integrated, there is a case where it is difficult to specify a process that must be synchronized. In this case, it is difficult to generate a synchronization table as in the first embodiment. It is sufficient that at least one process in the program is known in the synchronization table 901 of the present embodiment, and each core can be synchronized with history of changes of values.

The above-described embodiments have been described in detail in order to describe the invention in an easily understandable manner, and are not necessarily limited to those including the entire configuration that has been described above. Further, a part of the configuration of a certain embodiment can be also replaced with the configuration of another embodiment. Further, the configuration of one embodiment can be also added with the configuration of another embodiment. Further, addition, deletion, or substitution of other configurations can be made with respect to some configurations of each embodiment.

The above-described functions may also be realized by software by causing a processor to interpret and execute a program for realizing each of the functions. Information such as programs and files that realize the respective functions can be installed in a storage device such as a memory, a hard disk, and a solid state drive (SSD), or a storage medium such as an IC card, an SD card, and a DVD. Further, a part or whole of each of the above-described functions may be realized, for example, by hardware by designing with an integrated circuit.

In the above-described embodiments, control lines and information lines considered to be necessary for the description have been illustrated. All the configurations may be connected to each other.

### Reference Signs List

- 1: vehicle
- 2: vehicle control device
- 3: communication device
- 4: vehicle control device
- 5: drive device
- 6: recognition device
- 7: output device
- 8: input device
- 9: notification device
- 201: network link
- 202: ECU
- 202: GW
- 301: core
- 302: RAM
- 303: timer
- 304: ROM
- 305: Global RAM
- 306: I/O
- 307: internal bus
- 308: external memory
- 401: control unit
- 402: communication management unit
- 411: processing unit
- 412: timing monitoring unit
- 421: input unit
- 422: output unit
- 450: monitoring timing aggregation unit
- 501: simulator
- 502: display unit
- 511: communication unit
- 512: timing synchronization unit
- 513: control instruction unit
- 514: storage unit
- 521: input unit
- 522: output unit
- 601: communication route
- 701: control instruction information
- 801: log information (execution result)
- 901: synchronization table

## Claims

1. A verification device (501) for a vehicle control device (202) having a plurality of cores (301), the verification device (501) comprising:
a timing synchronization unit (512) configured to acquire synchronization timing information indicating a timing to synchronize the plurality of cores (301); and
a control instruction unit (513) configured to create control instruction information (701) for the plurality of cores (301) based on the synchronization timing information (713),
wherein the timing synchronization unit (512) is configured to determine whether each of the cores (301) has been synchronized at a timing at which synchronization needs to be performed based on execution results of the plurality of cores (301),
wherein
the timing synchronization unit (512) is configured to acquire next synchronization timing information when each of the cores (301) has been synchronized at the timing at which synchronization needs to be performed, and
the control instruction unit (513) is configured to create control instruction information for the plurality of cores (301) based on the next synchronization timing information,
wherein
the timing synchronization unit (512) is configured to instruct the control instruction unit (513) to transmit the same control instruction information as previous control instruction information to each of the cores (301) when each of the cores (301) has not been synchronized at the timing at which synchronization needs to be performed, ,
the verification device (501) further comprising
a storage unit configured to store a synchronization table including an instruction target (712) out of the plurality of cores (301) and an instruction timing (713) to synchronize the instruction target as configuration items,
wherein the timing synchronization unit (512) is configured to acquire the synchronization timing information using the synchronization table, and
wherein the verification device (501) is configured to be mounted on a vehicle.

2. The verification device (501) according to claim 1, wherein
the synchronization table further includes information on a process content to be executed next to the instruction timing, and
the control instruction unit (513) is configured to create the control instruction information including the process content to be executed next.

3. The verification device (501) according to claim 1, wherein
the synchronization table includes a variable name and a value of the variable name.

4. A vehicle electronic system comprising a vehicle control device (202) and the verification device (501) according to claim 1,
the control device (202) comprising the plurality of cores (301), each core (301) comprising:
a processing unit (411) configured to execute a process according to the control instruction information; and
a timing monitoring unit (412) configured to monitor a process content of the processing unit (411) and creates the execution result.

5. The vehicle control device according to claim 4, wherein
at least one of the plurality of cores (301) comprises a monitoring timing aggregation unit that collects the execution result from each of the cores.

## Patentansprüche

1. Verifizierungseinrichtung (501) für eine Fahrzeugsteuereinrichtung (202) mit einer Vielzahl von Kernen (301), wobei die Verifizierungseinrichtung (501) umfasst:
eine Timing-Synchronisationseinheit (512), die ausgestaltet ist, um eine Synchronisations-Timing-Information zu erlangen, die ein Timing zum Synchronisieren der Vielzahl von Kernen (301) angibt; und
eine Steueranweisungseinheit (513), die ausgestaltet ist, um eine Steueranweisungsinformation (701) für die Vielzahl von Kernen (301) basierend auf der Synchronisations-Timing-Information (713) zu erzeugen,
wobei die Timing-Synchronisationseinheit (512) ausgestaltet ist, um basierend auf Ausführungsergebnissen der Vielzahl von Kernen (301) zu ermitteln, ob jeder der Kerne (301) mit einem Timing, mit dem eine Synchronisation durchgeführt werden soll, synchronisiert wurde,
wobei
die Timing-Synchronisationseinheit (512) ausgestaltet ist, um eine nächste Synchronisations-Timing-Information zu erlangen, wenn jeder der Kerne (301) mit dem Timing, mit dem eine Synchronisation durchgeführt werden soll, synchronisiert wurde, und
die Steueranweisungseinheit (513) ausgestaltet ist, um basierend auf der nächsten Synchronisations-Timing-Information eine Steueranweisungsinformation für die Vielzahl von Kernen (301) zu erzeugen,
wobei
die Timing-Synchronisationseinheit (512) ausgestaltet ist, um die Steueranweisungseinheit (513) anzuweisen, die gleiche Steueranweisungsinformation wie die vorherige Steueranweisungsinformation an jeden der Kerne (301) zu senden, wenn nicht jeder der Kerne (301) mit dem Timing, mit dem eine Synchronisation durchgeführt werden soll, synchronisiert wurde,
wobei die Verifizierungseinrichtung (501) ferner eine Speichereinheit umfasst, die ausgestaltet ist, um eine Synchronisationstabelle zu speichern, die ein Anweisungsziel (712) der Vielzahl von Kernen (301) und ein Anweisungs-Timing (713) zum Synchronisieren des Anweisungsziels als Konfigurationselemente umfasst,
wobei die Timing-Synchronisationseinheit (512) ausgestaltet ist, um die Synchronisations-Timing-Information unter Verwendung der Synchronisationstabelle zu erlangen, und
wobei die Verifizierungseinrichtung (501) zur Anbringung an einem Fahrzeug ausgestaltet ist.

2. Verifizierungseinrichtung (501) nach Anspruch 1, wobei
die Synchronisationstabelle ferner eine Information hinsichtlich eines Prozessinhalts, der als nächstes mit dem Anweisungs-Timing auszuführen ist, umfasst, und
die Steueranweisungseinheit (513) ausgestaltet ist, um die Steueranweisungsinformation, die den als nächstes auszuführenden Prozessinhalt umfasst, zu erzeugen.

3. Verifizierungseinrichtung (501) nach Anspruch 1, wobei
die Synchronisationstabelle einen Variablennamen und einen Wert des Variablennamens umfasst.

4. Elektronisches Fahrzeugsystem, umfassend eine Fahrzeugsteuereinrichtung (202) und die Verifizierungseinrichtung (501) nach Anspruch 1,
wobei die Steuereinrichtung (202) die Vielzahl von Kernen (301) umfasst, wobei jeder Kern (301) umfasst:
eine Verarbeitungseinheit (411), die ausgestaltet ist, um einen Prozess gemäß der Steueranweisungsinformation auszuführen; und
eine Timing-Überwachungseinheit (412), die ausgestaltet ist, um einen Prozessinhalt der Verarbeitungseinheit (411) zu überwachen und das Ausführungsergebnis zu erzeugen.

5. Fahrzeugsteuereinrichtung nach Anspruch 4, wobei
zumindest einer der Vielzahl von Kernen (301) eine Überwachungs-Timing-Sammlungseinheit umfasst, die das Ausführungsergebnis von jedem der Kerne erfasst.

## Revendications

1. Dispositif de vérification (501) pour un dispositif de commande de véhicule (202) ayant une pluralité de cœurs (301), le dispositif de vérification (501) comprenant :
une unité de synchronisation de temporisation (512) configurée pour acquérir une information de temporisation de synchronisation indiquant une temporisation pour synchroniser la pluralité de cœurs (301) ; et
une unité d'instruction de commande (513) configurée pour créer une information d'instruction de commande (701) pour la pluralité de cœurs (301) sur la base de l'information de temporisation de synchronisation (713),
dans lequel l'unité de synchronisation de temporisation (512) est configurée pour déterminer si chacun des cœurs (301) a été synchronisé à une temporisation à laquelle une synchronisation a besoin d'être effectuée sur la base de résultats d'exécution de la pluralité de cœurs (301),
dans lequel
l'unité de synchronisation de temporisation (512) est configurée pour acquérir une information de temporisation de synchronisation suivante quand chacun des cœurs (301) a été synchronisé à la temporisation à laquelle une synchronisation a besoin d'être effectuée, et
l'unité d'instruction de commande (513) est configurée pour créer une information d'instruction de commande pour la pluralité de cœurs (301) sur la base de l'information de temporisation de synchronisation suivante,
dans lequel
l'unité de synchronisation de temporisation (512) est configurée pour donner une instruction à l'unité d'instruction de commande (513) de transmettre la même information d'instruction de commande que l'information d'instruction de commande précédente à chacun des cœurs (301) quand chacun des cœurs (301) n'a pas été synchronisé à la temporisation à laquelle une synchronisation a besoin d'être effectuée,
le dispositif de vérification (501) comprenant en outre
une unité de stockage configurée pour stocker une table de synchronisation incluant une cible d'instruction (712) parmi la pluralité de cœurs (301) et une temporisation d'instruction (713) pour synchroniser la cible d'instruction à titre d'éléments de configuration,
dans lequel l'unité de synchronisation de temporisation (512) est configurée pour acquérir l'information de temporisation de synchronisation en utilisant la table de synchronisation, et
dans lequel le dispositif de vérification (501) est configuré pour être monté sur un véhicule.

2. Dispositif de vérification (501) selon la revendication 1, dans lequel
la table de synchronisation inclut en outre une information concernant un contenu de traitement qu'il s'agit d'exécuter à la suite de la temporisation d'instruction, et
l'unité d'instruction de commande (513) est configurée pour créer une information d'instruction de commande incluant le contenu de traitement qu'il s'agit d'exécuter ensuite.

3. Dispositif de vérification (501) selon la revendication 1, dans lequel la table de synchronisation inclut un nom de variable et une valeur du nom de variable.

4. Système électronique de véhicule comprenant un dispositif de commande de véhicule (202) et le dispositif de vérification (501) selon la revendication 1,
le dispositif de commande (202) comprenant la pluralité de cœurs (301), chaque cœur (301) comprenant :
une unité de traitement (411) configurée pour exécuter un traitement en accord l'information d'instruction de commande ; et
une unité de surveillance de temporisation (412) configurée pour surveiller un contenu de traitement de l'unité de traitement (411) et pour créer le résultat d'exécution.

5. Dispositif de commande de véhicule selon la revendication 4, dans lequel
au moins un cœur parmi la pluralité de cœurs (301) comprend une unité d'agrégation de temporisation de surveillance qui collecte le résultat d'exécution à partir de chacun des cœurs.
